# EUROPEAN PATENT APPLICATION

(11) **EP 2 796 401 A1**
(43) Date of publication of application: **29.10.2014**
(21) Application number: 13396005.4
(22) Date of filing: 24.04.2013
(51) Int. Cl.: B66C 5/10, B66C 17/00

(54) **Crane arrangement**

(71) Applicant: STEVENEL OY, 33100 Tampere (FI)
(72) Inventor: Hyysalo, Heikki, 33530 Tampere (FI)
(74) Representative: Nieminen, Taisto Tapani

(57) **Abstract**

Crane arrangement for performing both a controlled loading and a controlled unloading of the load from the cargo space, especially from a cargo space (17) of a ship (16) in which case the arrangement comprises a crane apparatus (7) which can be moved on bars (1) while resting on wheels (2), comprises a moveable set of booms (9, 12) which is attached to the crane apparatus, a turning device (13) for rotating the set of booms (9, 12) around the vertical axis and comprises a lifting device, such as a hook (18), which is attached to the end of the boom (12). The bars (1) are located at both sides of the cargo space (17) in which case one bar (1) is essentially located at the level of the loading field (14) and the crane apparatus (7) comprises feet (3) and vertical bodies (4, 5) which are directed upwards from them which vertical bodies are joined to each other with the help of the horizontal balk (6) of the crane apparatus in which case the turning device (13) is adjusted on top of the mentioned balk (6) and the crane apparatus is adjusted on top of the turning device (13).

## Description

The object of the invention is a crane arrangement in order to perform both a controlled loading and a controlled unloading of the load from a cargo space, especially from a cargo space of a ship in which case the arrangement comprises a crane apparatus which can be moved while resting on wheels, a moveable set of booms which are attached to the crane apparatus, a turning device in order to rotate the set of booms around a vertical axis and a lifting device, such as a hook, which is attached to the end of the boom.

Hoisting cranes which move on rails next to the ship are previously known as quay cranes which quay cranes have a turning device on top of the body in such a way that the boom belonging to the crane can be directed in different directions. At the end of the boom there is the attachment of the hoisting wire rope and a lifting hook hangs while it is being supported by the wire ropes. The controlling of the load is fairly difficult due to the hanging crane hook and the stopping of the movement of the load for an accurate localization takes time.

Further bridge cranes are known which bridge cranes have a long horizontal balk which is located high enough in the support structures to run in a crosswise direction in relation to the direction of the balk. A wagon which can be moved in the direction of the balk is adjusted to the horizontal balk from which wagon the lifting hook hangs being supported by the hoisting wire ropes. The disadvantage of this kind of crane is also the fact that the moving of the load is slow because during the moving both the wagon and the horizontal balk and also the lifting hook must be moved. Also the stabilization of the swinging of the load for an accurate localization is difficult and takes time.

A crane arrangement is known from a Finnish patent publication FI-118595 with which arrangement an accurate localization of the load is possible. Pillars which support the crane rails and are located at the loading field are the disadvantage of the arrangement which pillars must be bypassed or otherwise the load will not be placed at all for example behind the pillars. The crane hangs from the horizontal balk in which case the movements of the booms will be restricted. Due to this the crane which hangs from the horizontal balk must be arranged to be moveable also at the horizontal balk so that sufficient dimensions can be gained. Also the turning device as a hanging solution must be made to be considerably stronger than for example when being located on top of the horizontal balk. The problems still exist even though the crane is located to move while resting on the edges of the ship or on the edges of the cargo space.

With the help of the crane arrangement according to the invention the above mentioned disadvantages and problems can be solved. It is characteristic of the crane arrangement that the rails are located at both sides of the cargo space in which case at least the other rail is essentially at the level of the loading field and the apparatus comprises feet which are equipped with the mentioned wheels and comprises vertical bodies which are directed upwards from them which vertical bodies are joined to each other with the help of the horizontal balk of the crane apparatus in which case the turning device is adjusted to be on top of the mentioned balk and the crane apparatus is adjusted to be on top of the turning device.

The advantage of the crane arrangement according to the invention is the fact that pillars which complicate the loading operation are not needed at the loading field not at least at the near distance and also the bar required by the arrangement will be located very close to the edge of the inner harbor. When the crane apparatus is located on top of the horizontal balk, the needed booms can be fairly long in which case the turning device of the crane can be located to be fixed at the other end of the horizontal balk and nevertheless the sufficient dimensions can be reached. The loading space can be covered, if needed.

In the following the invention is described more detailed by referring to the accompanying drawing in which
Figure 1 shows a crane arrangement in connection with the ship which is in the inner harbor.
Figure 2 shows the crane arrangement seen from the end.

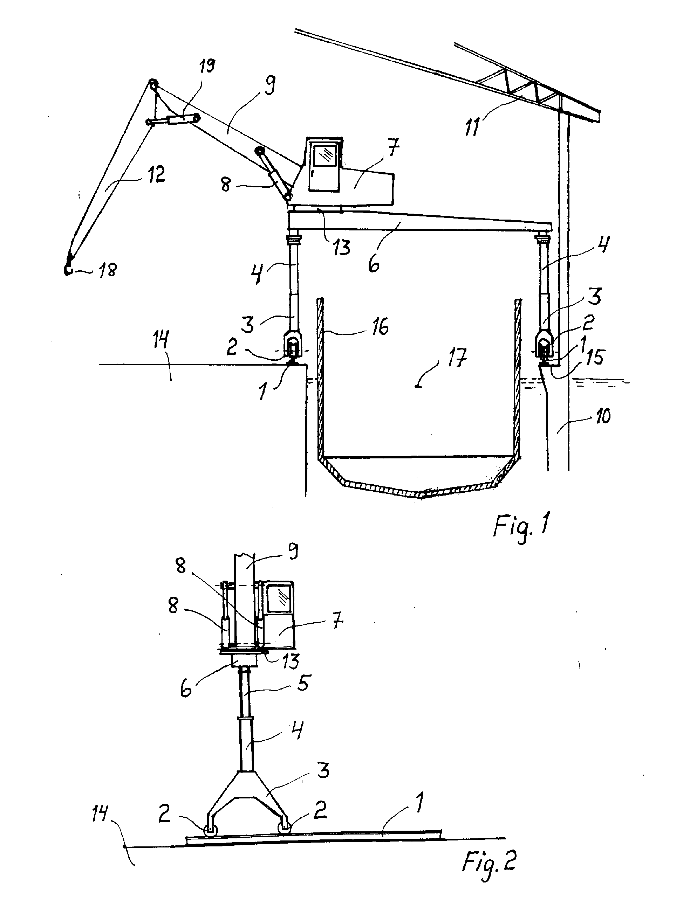

In the figure 1 there is a rail 1 which is located on loading field 14 in such a way that it rests on the loading field for making the crane apparatus 7 to move and the other bar 1 is located at a support of the protruding part 15 of the pillar 10 which is located to rest on the underwater base. The crane arrangement can be moved while resting on the rails 1 when it comprises feet 3 which are equipped with wheels 2. Vertical bodies 4, 5 rise upwards from the feet 3 which bodies support a horizontal balk 6. The horizontal balk 6 runs

above the cargo space of the ship 16. The crane apparatus 7 is located on top of the turning device 13 which is located on top of the horizontal balk 6 in which case it can be turned around the vertical axis during the lifting operations. The crane apparatus 7 comprises booms 9 and 12 and their moving cylinders 8 and 19 and further comprises a lifting hook 18 at the end of the boom 12. With the help of the crane apparatus 7 the movements of the loads can easily and accurately be performed over the edge of the ship 16 in both directions.

The crane arrangement seen from the end is shown in the figure 2. The foot 3 is designed to comprise at least two wheels 2 which are located at a distance from each other in order to improve stability. The vertical body 4, 5 can be lengthened telescopically in this example when the part 5 can be lifted and lowered hydraulically or mechanically inside the part 4 and upwards from there. Also the body part 5 can for example be moved upwards and downwards parallelly in relation to the body part 4, most advantageously between two parallel body parts 4 in which case more stability can be gained for the structure. Also the vertical body can be scissor-like regarding its elevation adjustment part. Such elevation adjusting of the horizontal balk 6 is needed when the edge heights of the ships varies and often also then when the load is first being loaded to the bottom of the cargo space 17 and then on top of them more into a locating position which is considerably higher.

Instead of the ship 16 to be loaded the same crane arrangement can be used for loading wagons of a train or loading lorries both in an open or a covered space.

## Claims

1. Crane arrangement for performing both a controlled loading and a controlled unloading of the load from the cargo space, especially from a cargo space (17) of a ship (16) wherein the arrangement comprises a crane apparatus (7) which can be moved on rails (1) while resting on wheels (2), comprises a moveable set of booms (9, 12) which is attached to the crane apparatus, a turning device (13) for rotating the set of booms (9,12) around the vertical axis and comprises a lifting device, such as a hook (18), which is attached to the end of the boom (12), **characterized in that** the rails (1) are located at both sides of the cargo space (17) wherein one rail (1) is essentially located at the level of the loading field (14) and the other rail is resting on the foundation which is located at the other side of the ship (16) and the crane apparatus (7) comprises feet (3) which are equipped with the mentioned wheels (2) and vertical bodies (4,5) which are directed upwards from them which vertical bodies are joined to each other with the help of the horizontal balk (6) of the crane apparatus wherein the turning device (13) is adjusted on top of the mentioned balk (6) and the crane apparatus (7) is adjusted on top of the turning device (13).

2. Crane arrangement according to the claim 1, **characterized in that** the vertical bodies (4, 5) can be lengthened by moving the body part 5 in relation to the other body part (4) for example parallelly or telescopically.

3. Crane arrangement according to the claim 1, **characterized in that** the arrangement is formed for a covered space.

4. Crane arrangement according to the claim 1, **characterized in that** the foot (3) comprises at least two wheels (2) which move on the rails (1) at a distance from each other.

5. Crane arrangement according to the claim 1, **characterized in that** the pillar (10) which supports the bar (1) functions at the same time also a pillar which supports the roof structure (11).

6. Crane arrangement according to the claim 1, **characterized in that** both bars (1) are located essentially at the level of the loading field (14) on a ground-supported foundation.
